# EUROPÄISCHE PATENTANMELDUNG

(11) **EP 2 875 890 A1**
(43) Veröffentlichungstag der Anmeldung: **27.05.2015**
(21) Anmeldenummer: 13194241.9
(22) Anmeldetag: 25.11.2013
(51) Int. Cl.: B23D 65/00

(54) **Verfahren zur Herstellung eines Vormaterials für ein Zerspanungswerkzeug und entsprechendes Vormaterial**

(71) Anmelder: Böhler-Uddeholm Precision Strip GmbH, 3333 Böhlerwerk (AT)
(72) Erfinder: Ahorner, Leander, A-3340 Waidhofen/Ybbs (AT); Mayrhofer, Gerhard, A-3314 Strengberg (AT); Neswadba, Markus, A-3331 Kematen/Ybbs (AT)
(74) Vertreter: Reitstötter Kinzebach

(57) **Zusammenfassung**

Die Erfindung betrifft ein Verfahren zur Herstellung eines Vormaterials für ein Zerspanungswerkzeug, insbesondere eines Vormaterials für ein Sägeblatt, ein Sägeband, eine Schneidlinie, ein Stanzmesser oder eine Klinge, wobei man einen ersten flächigen Träger (10) mit einer seiner Kanten (11) entlang einer Kante (12) eines zweiten flächigen Träger (13) anordnet; man die ersten und zweiten Träger (10, 13) entlang der Kanten (11,12) unter Zufuhr wenigstens eines ersten teilchenförmigen Schneidenmaterials (19, 19a) miteinander verschweißt; und man den ersten und zweiten Träger (10,13) im Wesentlichen entlang der so erzeugten Schweißverbindung (24) wieder trennt. Die Erfindung betrifft außerdem eine entsprechendes flächiges Vormaterial.

## Beschreibung

Die vorliegende Erfindung betrifft ein Verfahren zur Herstellung eines Vormaterials für ein Zerspanungswerkzeug, insbesondere eines Vormaterials als Ausgangskomponente zur Herstellung eines Sägeblattes, eines Sägebandes, einer Schneidlinie, eines Stanzmessers oder einer Klinge, beispielsweise einer Abstreifklinge. Die Erfindung betrifft auch ein entsprechendes Vormaterial.

Zerspanungswerkzeuge, wie beispielsweise Bandsägen zur Metallbearbeitung, müssen eine ganze Reihe von Anforderungen erfüllen, um ökonomisch verwendbar zu sein: Das Bandmaterial muss flexibel und elastisch sein, es muss nicht nur die Zugspannungen aufnehmen und ertragen können, denen das Sägeband schon von seiner Montage her ausgesetzt ist, sondern es muss darüber hinaus auch die das Band auf die Biegung beanspruchenden Kräfte während des Sägevorgangs und die entsprechenden Torsionsmomente und -spannungen ertragen können, die das Band bei der Drehung um seine Längsachse oberhalb und unterhalb des Schneidtisches bzw. vor und nach der Schneidstelle erfährt. Hinzu kommen dynamische Belastungen, die durch den Eingriff der einzelnen Zähne in das zu bearbeitende Material entstehen, und nicht zuletzt thermische Belastungen durch Temperaturen, die im Zahnbereich und insbesondere an den Zahnspitzen 600 °C und mehr erreichen können. Da die Kühlung des Bandes eine Abfuhr dieser Wärme bewirkt, kommt es nicht nur zu dieser thermischen Belastung, sondern auch zur Ausbildung eines Temperaturgradienten und den damit zusammenhängenden thermischen Spannungen, die sich den mechanischen und insbesondere den dynamischen Spannungen überlagern.

Da sich die Anforderungen hinsichtlich Zähigkeit und Biegefestigkeit des Sägebandes einerseits und Warmhärte und Verschleißfestigkeit der Sägezähne andererseits durch ein einzelnes Material, beispielsweise ein Metall oder eine Metalllegierung, nur unzureichend realisieren lassen, werden als Ausgangskomponente bzw. Vormaterial für Hochleistungszerspanungswerkzeuge bevorzugt so genannte Bimetallbänder oder Bimetallblätter eingesetzt. Derartige Bimetallbänder bzw. -blätter bestehen üblicherweise aus einem flächigen Träger aus einem Trägermaterial, welches die nötige Zähigkeit und Biegefestigkeit für das spätere Zerspanungswerkzeug aufweist, beispielsweise aus niedriglegierten Stählen oder auch aus Kohlenstoffstahl. Auf eine schmale Kante des flächigen Trägers wird üblicherweise ein Draht aus einem Schneidenmaterial geschweißt, welches eine höhere Verschleißfestigkeit und eine höhere Wärmehärte aufweist. Typischerweise wird als Schneidenmaterial ein Kantendraht aus Schnellarbeitsstahl (HSS) verwendet.

Aus diesem Vormaterial stellt der Sägehersteller dann das Sägeblatt oder Sägeband her. Dazu wird an der Kante des flächigen Trägers, an der sich der verschweißte Schnellarbeitsstahldraht befindet, das Zahnprofil des späteren Sägeblattes oder - bandes herausgearbeitet, beispielsweise herausgefräst oder herausgeschliffen. Auf diese Weise entstehen Zähne mit einem spitzen Bereich aus Schnellarbeitsstahl, wobei der Rest des Sägeblattes oder -bandes aus dem zähfesten elastischen Stahl des flächigen Trägers besteht. Je nach Anforderungsprofil der Säge können die Zähne vollständig aus Schneidenmaterial bestehen, bevorzugt bestehen jedoch nur die Zahnspitzen aus Schneidenmaterial, während der Zahnfuß in den flächigen Träger hinabreicht und somit aus dem zähfesten elastischen Trägermaterial besteht.

Ein solches, in herkömmlicher Weise hergestelltes Bimetallband oder -blatt weist jedoch den Nachteil auf, dass das Herausarbeiten des Zahnprofils mit einem hohen Verlust an Schneidenmaterial verbunden ist, da das Material aus den Zahnzwischenräumen keine weitere Verwendung findet. Zur Lösung dieses Problems ist beispielsweise in der internationalen Patentanmeldung WO 2006/000256 A1 der vorliegenden Anmelderin vorgeschlagen worden, ein Vormaterial zur Herstellung von Sägeblättern oder Sägebändern zu verwenden, das aus zwei flächigen Trägern besteht, die mittels eines Kantendrahts aus einem Schnellarbeitsstahl miteinander verbunden sind. Dieser Verbund lässt sich durch geeignete Wahl einer Trennlinie so auftrennen, dass zwei Bimetallbänder entstehen, deren Kantenprofil näherungsweise bereits dem Zahnprofil des späteren Sägeblattes oder -bandes entspricht. Nach der Auftrennung wird jedes Bimetallband nachbearbeitet, bis die endgültig gewünschte Form der Zähne erreicht ist. Auf diese Weise ist der Materialverlust an Schneidenmaterial geringer.

Die bisher beschriebenen Verfahren sind jedoch weiterhin mit dem Nachteil behaftet, dass das eingesetzte Schneidenmaterial einerseits in Form von Kantendrähten herstellbar sein und andererseits mit dem flächigen Träger verschweißbar sein muss. Diese Voraussetzungen schränken die Auswahl an Materialien sowohl für den flächigen Träger als auch für die Schneiden erheblich ein.

In dem US-Patent US 7,373,857 B2 wird ein Verfahren zur Herstellung eines Zerspanungswerkzeuges beschrieben, wo ebenfalls ein flächiges Verbundmaterial aus unterschiedlichen Metalllegierungen eingesetzt wird. Dabei wird ein Draht aus Schneidenmaterial in eine in einem flächigen Träger ausgesparte Rille eingelegt und durch Druck und Wärmebehandlung einplattiert. Dieses Verfahren hat zwar Kostenvorteile, da an Stelle von Kantendraht beispielsweise auch Runddraht verwendet werden kann, jedoch ist auch hier die Materialauswahl eingeschränkt, da das Schneidenmaterial einerseits als Draht vorliegen muss und andererseits nicht jede Kombination von Schneidenmaterial und Material des flächigen Trägers eine ausreichend stabile Verbindung der beiden Materialien ermöglicht.

Aus der EP 1 404 484 B1 ist ein Verfahren zur Herstellung eines Zerspanungswerkzeuges bestehend aus einem bandförmigen oder scheibenförmigen Trägermaterial bekannt, auf dessen im Wesentlichen hochkant stehende Kante ein Schneidenbereich in Form einer pulverförmigen Legierung aufgebracht und im Zuge des Aufbringens mittels Laserstrahl geschmolzen wird und auf der Kante erstarrt. Mit diesem Verfahren stehen eine viel größere Zahl an Schneidenmaterialien zur Verfügung, da die Voraussetzung wegfällt, dass das Schneidenmaterial als Kant- bzw. Runddraht herstellbar ist. Nachteilig an der pulvermetallurgischen Herstellung des Schneidbereichs ist jedoch, dass die erreichbare Prozessgeschwindigkeit geringer als beim Verschweißen eines Kantdrahtes ist.

Der vorliegenden Erfindung liegt daher das technische Problem zugrunde, ein Verfahren zur Herstellung eines Vormaterials für ein Zerspanungswerkzeug anzugeben, das kostengünstig und einfach zu realisieren ist und den Einsatz einer großen Vielfalt an Materialien für den flächigen Träger und das Schneidenmaterial ermöglicht. Ferner soll ein entsprechendes Vormaterial zur Herstellung eines Zerspanungswerkzeuges bereitgestellt werden.

Gelöst wird das technische Problem durch das Verfahren zur Herstellung eines Vormaterials für ein Zerspanungswerkzeug gemäß vorliegendem Anspruch 1, vorteilhafte Weiterbildungen des Verfahrens sind Gegenstände der abhängigen Ansprüche.

Die Erfindung betrifft demnach ein Verfahren zur Herstellung eines Vormaterials für ein Zerspanungswerkzeug, insbesondere eines Sägeblattes, eines Sägebandes, einer Schneidlinie oder eines Stanzmessers, wobei man einen ersten flächigen Träger mit einer seiner Kanten entlang einer Kante eines zweiten flächigen Trägers anordnet, man die ersten und zweiten Träger entlang der Kanten unter Zufuhr wenigstens eines teilchenförmigen Schneidenmaterials, insbesondere eines Schneidenmaterials in Pulverform, miteinander verschweißt und man den ersten und zweiten Träger im Wesentlichen entlang der so erzeugten Schweißverbindung wieder trennt. Das Anordnen der beiden flächigen Träger entlang ihrer Kanten zueinander bedeutet, dass die flächigen Träger in dem Bereich, wo das teilchenförmige Schneidenmaterial zugeführt wird, zumindest annähernd parallel zueinander angeordnet sind. Die einander gegenüberliegenden Kanten der flächigen Träger können sich dabei berühren oder einen gewissen, vorgegebenen Abstand aufweisen. Durch das Verschweißen entsteht im Kontaktbereich zwischen den Kanten der flächigen Träger und dem teilchenförmigen Schneidenmaterial jeweils eine Legierungszone aus dem Kantenmaterial der flächigen Träger und dem teilchenförmigen Schneidenmaterial. Das Trennen der beiden flächigen Träger kann im einfachsten Fall entlang einer geraden Mittellinie durch die entstandene Schweißverbindung erfolgen. Die Trennlinie muss jedoch nicht ausschließlich in der Schweißverbindung verlaufen, sondern kann auch eine kompliziertere Form aufweisen und gegebenenfalls auch teilweise in den flächigen Träger reichen, damit das Auftrennen bereits ein Kantenprofil erzeugt, das der gewünschten späteren Form der Zähne angenähert ist.

Das erfindungsgemäße Verfahren weist zahlreiche Vorteile auf. Da das Schneidenmaterial in Teilchenform zugeführt wird, ist man bei der Auswahl des Schneidenmaterials nicht auf Materialien beschränkt, die sich als Draht herstellen lassen. Selbst bei Verwendung von Materialien, die prinzipiell auch als Draht erhältlich sind, besteht bei der Verwendung eines teilchenförmigen, insbesondere eines pulverförmigen Materials ein hoher Kostenvorteil, da die mit der Drahtherstellung verbundenen Kosten wegfallen. Ferner wird die mit der pulvermetallurgischen Herstellung des Schneidbereichs verbundene Limitierung der Prozessgeschwindigkeit dadurch gemildert, dass mit dem erfindungsgemäßen Verfahren nach Trennung der Schweißverbindung zwei Bimetallbänder bzw. -scheiben entstehen, die durch einen einzigen Schweißvorgang hergestellt worden sind. Effektiv wird die Prozessgeschwindigkeit daher gegenüber dem aus EP 1 404 484 B1 bekannten Verfahren verdoppelt. Die effektive Prozessgeschwindigkeit kann noch weiter erhöht werden, indem man weitere flächige Träger hinzufügt und ebenfalls unter Zufuhr von teilchenförmigem Schneidenmaterial verschweißt, so dass ein Verbund aus mehreren Streifen Trägermaterial erzeugt wird, die mittels dazwischen angeordneter Streifen Schneidenmaterial miteinander verbunden sind.

Die beiden flächigen Träger können mit ihren Kanten aneinanderstoßen und das teilchenförmige Schneidenmaterial kann auf den Verbindungsbereich der beiden Träger aufgebracht werden. Vorzugsweise ordnet man die ersten und zweiten flächigen Träger aber so zueinander an, dass zwischen dem ersten und zweiten Träger wenigstens eine Ausnehmung gebildet wird, wobei man das wenigstens eine Schneidenmaterial in die Ausnehmung zuführt. Somit entsteht nach Trennen der beiden Träger entlang der Schweißverbindung ein Kantenbereich, der nur noch aus Schneidenmaterial besteht, so dass bei der späteren Weiterverarbeitung Zahnspitzen herausgearbeitet werden können, die ebenfalls nur noch aus Schneidenmaterial bestehen.

Die flächigen Träger können jede gewünschte Form besitzen, die geeignet ist, daraus bei der späteren Weiterverarbeitung ein Zerspanungswerkzeug wie ein Sägeblatt, eine Sägeband, eine Schneidlinie, oder ein Stanzmesser oder eine Klinge zu erzeugen. Besonders bevorzugt werden die flächigen Träger in dem erfindungsgemäßen Verfahren jedoch in Form von Bändern aus Metall oder Metalllegierung bereitgestellt, insbesondere von Endlosbändern, die beispielsweise von einer Spule abgewickelt und einer Schweißeinrichtung zugeführt werden.

Bevorzugt ordnet man daher die ersten und zweiten flächigen Träger in Form von Bändern in einem Abstand voneinander an, so dass einander gegenüberliegenden Kanten der ersten und zweiten flächigen Träger die Ausnehmung definieren, in die dann das teilchenförmige Schneidenmaterial zugeführt wird.

Die Kante des ersten flächigen Trägers und/oder die Kante des zweiten flächigen Trägers können auch vorbearbeitet sein und verschiedenste Formen aufweisen, die dann letztlich nach Trennen des Verbundes das Querschnittsprofil des Schneidenbereichs bestimmen. Beispielsweise können die Kanten der flächigen Träger abgefast sein oder konkave Teilabschnitte der Ausnehmung zum Einbringen des Schneidenmaterials definieren. Im Fall von bearbeiteten Kanten müssen die Kanten keinen Abstand voneinander aufweisen, sondern können auch aneinanderstoßen, da bereits die durch die Vorbearbeitung geeignete Vertiefungen in den Kantenbereich eingebracht werden, welche die Ausnehmungen zur Zufuhr des teilchenförmigen Schneidenmaterials bilden.

Die ersten und zweiten Träger können auf unterschiedlichste Weise miteinander verschweißt werden, indem man beispielsweise im Bereich der Kante(n) den ersten und/oder den zweiten flächigen Träger und/oder das erste teilchenförmigen Schneidenmaterial zumindest teilweise aufschmilzt und den aufgeschmolzenen Materialverbund wenigsten teilweise erstarren lässt. Typischerweise wird zumindest eines der beteiligten Materialien, beispielsweise der Kantenbereich des ersten Trägers und/oder der Kantenbereich des zweiten flächigen Trägers aufgeschmolzen, so dass beim Erstarren ein Materialverbund von erstem und zweitem Träger im Kantenbereich und dem zugeführten teilchenförmigen Schneidenmaterial entsteht.

Das Schneidenmaterial selbst kann ebenfalls aufschmelzen, es kann sich jedoch auch als teilchenförmiger Schneidstoff in dem Schweißbereich einlagern. Die Matrix, in welcher sich das teilchenförmige Schneidenmaterial einlagert, kann entweder ein Material sein, das zusammen mit dem teilchenförmigen Schneidenmaterial zugeführt wird, und das bei Energieauftrag selbst aufschmilzt. Alternativ kann auch der Randbereich des ersten und/oder zweiten Trägers bzw. ein Mischbereich des ersten und zweiten Trägers als Matrix für ein nicht schmelzendes teilchenförmiges Schneidenmaterial dienen. Bevorzugt wird jedoch ein teilchenförmiges Schneidenmaterial verwendet, das beim Verschweißen des ersten und zweiten Trägers selbst schmilzt und insbesondere, wenn der erste und zweite Träger in einem Abstand zueinander angeordnet sind, die Schweißverbindung zwischen dem ersten und zweiten Träger herstellt.

Zum Trennen der so hergestellten Schweißverbindung als abschließendem Schritt des erfindungsgemäßen Verfahrens können zahlreiche aus dem Stand der Technik bekannten Trennverfahren, wie Schneiden, Spaltschneiden, Stanzen, Laserschneiden, Wasserstrahlschneiden oder ähnliches verwendet werden.

Die ersten und zweiten flächigen Träger bestehen vorzugsweise aus einem Grundkörper aus einem Trägermaterial, beispielsweise einem Metall oder einer Metalllegierung, zum Beispiel einem niedriglegierten Werkzeugstahl. Dann wird mit dem erfindungsgemäßen Verfahren durch Zufuhr des teilchenförmigen Schneidenmaterials ein entsprechender hochfester Schneidenbereich an den Kanten der beiden flächigen Träger erzeugt.

Die in dem erfindungsgemäßen Verfahren eingesetzten ersten und zweiten flächigen Träger können zusätzlich zu dem Grundkörper aus dem üblichen Trägermaterial jedoch bereits jeweils einen Kantenbereich aufweisen, der aus einem weiteren Schneidenmaterial besteht. Derartige flächige Träger können entweder vorab mit dem erfindungsgemäßen Verfahren hergestellt worden sein oder es handelt sich um Bimetallbänder, die mit einem aus dem Stand der Technik bekannten Verfahren hergestellt wurden, beispielsweise durch Aufschweißen eines Kantdrahtes aus dem zweiten Schneidenmaterial auf den Grundkörper aus Trägermaterial. Durch das erfindungsgemäße Verfahren wird dem weiteren Schneidenmaterial somit ein zusätzlicher Bereich aus erstem Schneidenmaterial zugefügt, so dass ein mehrschichtiges Band entsteht. Bei den ersten und weiteren Schneidenmaterialien handelt es sich vorzugsweise um unterschiedliche Materialien.

Alternativ oder zusätzlich kann man vor dem Trennen des Verbundes aus erstem und zweitem Träger und dem erstem Schneidenmaterial zumindest ein zweites teilchenförmiges Schneidenmaterial zuführen und aufschmelzen, um auf diese Weise ein zwei- oder dreischichtiges Verbundmaterial zu erzeugen. Diesen Prozess kann man selbstverständlich auch in mehreren Stufen mit weiteren teilchenförmigen Schneidenmaterialien fortsetzen, um ein mehrschichtiges Verbundmaterial zu erzeugen.

Das erste und gegebenenfalls das zweite teilchenförmige Schneidenmaterial oder die weiteren teilchenförmigen Schneidenmaterialien werden vorzugsweise in Form eines Pulvers, eines Granulats, einer Paste oder eines Fülldrahtes zugeführt. Im Fall eines Fülldrahts befindet sich das teilchenförmige Schneidenmaterial in Form eines Pulver, eines Granulates oder einer Paste im Inneren eines röhrenförmigen Drahtes. Der Draht selbst kann beispielsweise aus dem Material des Trägers bestehen. Die Zufuhr in Pulverform ist jedoch besonders bevorzugt.

Die Zufuhr des teilchenförmigen Schneidenmaterials kann in unterschiedlichster Weise erfolgen. Liegt das teilchenförmige Schneidenmaterial in Pulver- oder Pastenform vor, kann die Zufuhr mittels einer Düse, beispielsweise einer Ringdüse oder einer Schlitzdüse erfolgen. Liegt das teilchenförmige Schneidenmaterial als Fülldraht vor, kann dieser beispielsweise von einer Vorratsspule zugeführt werden.

Die verwendeten Schneidenmaterialien enthalten vorzugsweise Metalle und/oder Metalllegierungen, beispielsweise Metalle oder Metalllegierungen, die bei dem Schweißprozess selbst aufschmelzen, wie beispielsweise Schnellarbeitsstahl (HSS).

Als teilchenförmige Schneidenmaterialien können beispielsweise alle gängigen HSS-Werkstoffe, welche bereits als Draht für Bi-Metall für Sägeblätter oder Sägebänder eingesetzt werden (beispielhaft dafür sind S 2-10-1-8 (M42, 1.3247) oder S 6-5-2 (M2, 1. 3343)) verwendet werden. Darüberhinaus können im erfindungsgemäßen Verfahren auch alle weiteren HSS-Werkstoffe, welche nicht als Draht verfügbar sind, eingesetzt werden. Hierbei kann sich die Legierungszusammensetzung in Richtung 0,5 - 2,5% C, 0,1 - 1,0% Si, 0,1 - 0,7% Mn, 3,0 - 6,0% Cr, 2,0 - 11 % Mo, bis 6,5%V, bis 15%W, bis 15%Co bewegen. Außerdem können Karbidbildner wie Nb und Ti mit einem prozentualen Gehalt von bis 5% zugegeben werden.

Alternativ oder zusätzlich können die Schneidenmaterialien auch metallische Hartstoffe enthalten. Metallische Hartstoffe sind Boride, Karbide, Silizide und Nitride hochschmelzender Übergangsmetalle, aber auch Oxide in Verbindung mit umformbaren Gefügebestandteilen, d.h. einer Matrix in welcher die metallischen Hartstoffe eingelagert sind. Unter metallische Hartstoffe fallen z.B. TiC, TaC, WC, TiB₂, MoSi₂, Al₂O₃, SiO₂), woraus sich auch Mischkristalle (Z.B. TiC-WC, Mo₂C-TiC), Doppelcarbide bzw. Komplexcarbide (z.B. Co₃W₃C, Ni₃W₃C) und intermetallische Verbindungen ableiten lassen. Ferner kommen auch Mischungen von HSS-Werkstoffen mit metallischen Hartstoffen in Frage. Neue Schneidstoffe durch mechanisches Legieren sind selbstverständlich ebenso denkbar. Es kommen auch die ternären Systeme Fe-Co-Mo bzw. Fe-Co-W und des daraus ableitbaren Vierstoffsystems Fe-Co-Mo-W als Schneidwerkstoff in Frage. Diese Systeme können sehr feine Ausscheidungen im Zuge einer Ausscheidungshärtung bilden, was zu einer enormen Härtesteigerung führt. Im lösungsgeglühten Zustand sind solche Legierungen entsprechend weich und können auch kaltumgeformt werden. Übliche Legierungszusammensetzungen solcher ausscheidungshärtbaren Legierungen sind im Bereich von 23 - 25% Co und einer Kombination W + Mo/2 von 10 - 31 %. Den Rest bilden Fe und erschmelzungsbedingte Verunreinigungen.

Als Trägermaterialien können im erfindungsgemäßen Verfahren alle gängigen Rückenmaterialien in Betracht gezogen werden. Es können beispielsweise übliche niedriglegierte Stähle, welche eine hohe Zähigkeit und Dauerfestigkeit besitzen verwendet werden. Geeignete flächige Träger besitzen beispielsweise eine chemischen Zusammensetzung im Bereich von 0,2 -0,6% C, 0,1 - 1,0% Si, 0,3 - 2,0% Mn, 0,5 - 7,0% Cr, 0,1 - 2,6%Mo, bis 0,6% V und bis 5,0% W. Geringe Zusätze von Nb und Ti im Bereich von bis zu 0,5% gesamt können zur Kornfeinerung beigemengt sein. Eisen und erschmelzungsbedingte Verunreinigungen bilden den Rest. Als Trägermaterial kann auch Kohlenstoffstahl mit 0,50 bis 1,50% C, bis 1,5% Si, bis 1,5%Mn Anwendung finden.

Die ersten und zweiten Träger werden durch Erhitzen des Verbindungsbereichs durch geeignete Energiezufuhr, gegebenenfalls unter Anwendung von Druck, miteinander verschweißt. Die Energiezufuhr erfolgt beispielsweise mittels einer Schweißvorrichtung. Die Energiezufuhr muss ausreichen, um wenigstens eines der beteiligten Materialien aufzuschmelzen. Vorzugsweise werden der erste und zweite Träger durch Energiezufuhr mittels eines oder mehrerer Laser miteinander verschweißt. Die Energiezufuhr kann aber auch auf andere Weise, beispielsweise durch Elektronenstrahlen, erfolgen. Insbesondere bei Zufuhr des teilchenförmigen Schneidenmaterials in Form einer Paste oder eines Fülldrahtes kann auch jede andere herkömmliche Schweißvorrichtung, beispielsweise eine Lichtbogen- oder Schutzgasschweißvorrichtung oder eine Widerstandsschweißvorrichtung, verwendet werden.

Je nach späterem Verwendungszweck kann man das teilchenförmige Schneidenmaterial nur auf einer Seite der flächigen Träger zuführen. Vorzugsweise führt man aber das flächige Schneidenmaterial auf beiden Seiten der flächigen Träger zu, also auf der Ober- und Unterseite der flächigen Träger. Dies kann gleichzeitig oder nacheinander erfolgen, beispielsweise kann man die flächigen Träger im Bereich der Schweißvorrichtung vertikal anordnen und das teilchenförmige Schneidenmaterial gleichzeitig von beiden Seiten zuführen. Bei einer horizontalen Anordnung der flächigen Träger im Schweißbereich kann man die beiden flächigen Träger nach Aufbringen des teilchenförmigen Schneidenmaterials auf der Oberseite über eine Umlenkrolle führen, so dass in einem kompakten Bereich der Prozessstrecke die Unterseite der Träger nach oben gerichtet ist und zum Aufbringen des Schneidenmaterials bereit steht. Insbesondere wenn die flächigen Träger als Bänder vorliegen, ist es beispielsweise auch denkbar, die beiden Bänder nach Aufbringen des teilchenförmigen Schneidenmaterials auf der Oberseite auf einer gewissen Laufstrecke des Bandes über einen Winkel von 180° zu verdrehen, so dass etwas weiter stromab die ursprüngliche Unterseite der Träger nach oben gerichtet ist.

Die Erfindung betrifft auch ein flächiges Vormaterial zur Herstellung eines Zerspanungswerkzeuges, insbesondere eines Sägeblattes, eines Sägebandes, einer Schneidlinie oder eines Stanzmessers, welches nach dem oben beschriebenen Verfahren erhältlich ist.

Gemäß einer ersten Variante umfasst das erfindungsgemäße flächige Vormaterial einen flächigen Träger, der einen Grundkörper aus einem Trägermaterial aufweist, und einen Schneidenbereich aus wenigstens einem ersten Schneidenmaterial, wobei der flächige Träger und der Schneidenbereich über eine erste Legierungszone miteinander verbunden sind. Das erste Schneidenmaterial wird mit dem erfindungsgemäßen Verfahren in Teilchenform auf den flächigen Träger so aufgebracht, so dass der entstehende Schneidenbereich und der flächige Träger auf einer Querschnittslänge überlappen, die im Bereich des 0,2 - 3-fachen der Querschnittsbreite des flächigen Trägers liegt. Vorzugsweise überlappen der entstehende Schneidenbereich und der flächige Träger auf einer Querschnittslänge, die im Bereich des 0,3 - 2-fachen, besonders bevorzugt im Bereich des 0,5 - 1,5-fachen der Querschnittsbreite des flächigen Trägers liegt. Im Gegensatz zu einem herkömmlichen, aus Kantdraht hergestellten Bimetallband gibt es im Querschnitt des erfindungsgemäßen Vormaterials also keine eindeutige Höhe, an welcher der ursprüngliche flächige Träger in den Kantenbereich übergeht, der aus dem ursprünglich in Teilchenform zugeführten Schneidenmaterial entstanden ist. Vielmehr reicht der flächige Träger beispielsweise im Inneren des flächigen Vormaterials weiter in den Kantenbereich hinein als im Außenbereich an der Ober- und/oder der Unterseite. Je nach Form der Kante des ursprünglichen flächigen Trägers, kann der flächige Träger auch an der Ober- und/oder Unterseite weiter in den Kantenbereich aus Schneidenmaterial hineinreichen, als im Inneren.

Der flächige Träger kann aus einem Grundkörper aus Trägermaterial bestehen. Alternativ kann der flächige Träger einen Grundkörper aus Trägermaterial und einen Kantenbereich aus zumindest einem weiteren Schneidenmaterial umfassen, so dass mit dem erfindungsgemäßen Verfahren ein mehrschichtiges Vormaterial entsteht. Als flächiger Träger kann also beispielsweise ein Bimetallband verwendet werden, dass nach einem aus dem Stand der Technik bekannten Verfahren hergestellt wurde.

Gemäß einer Variante eines mehrschichtigen Vormaterials, umfasst das erfindungsgemäße flächige Vormaterial einen flächigen Träger, der einen Grundkörper aus einem Trägermaterial aufweist, und einen Schneidenbereich aus wenigstens einem Schneidenmaterial, wobei der Schneidenbereich an wenigstens einer Ecke einen Eckenbereich aus einem anderen Schneidenmaterial aufweist. Diese Variante des Vormaterials ist dadurch gekennzeichnet, dass der Eckenbereich und der Schneidenbereich über eine Legierungszone miteinander verbunden sind. Somit lassen sich die Zähne weiter optimieren, indem beispielsweise Ecken mit besonders hoher Verschleiß- und insbesondere Schneidfestigkeit erzeugt werden, während der mittlere Bereich der Zähne eine höhere Zähigkeit und Biegefestigkeit als die Ecken, aber gleichzeitig immer noch eine höhere Verschleißfestigkeit als das Material des Grundkörpers aufweist. Das andere Schneidenmaterial für den Eckenbereich wird dabei mit dem erfindungsgemäßen Verfahren zugeführt. Der Schneidenbereich aus dem wenigstens einen Schneidenmaterial kann aus einem ersten teilchenförmigen Schneidenmaterial mit dem erfindungsgemäßen Verfahren hergestellt sein oder kann aus einem weiteren Schneidenmaterial bestehen, welches beispielsweise als Kantdraht auf den Grundkörper aufgeschweißt wurde. Somit kann der flächige Träger auch hier aus einem Grundkörper aus Trägermaterial bestehen oder zusätzlich einen Kantenbereich aus zumindest einem weiteren Schneidenmaterial umfassen.

Besonders bevorzugt ist das erfindungsgemäße flächige Vormaterial ein Band. Ein solches Band kann nach dem erfindungsgemäßen Verfahren zur Weiterverarbeitung in Spulenform aufgewickelt und beispielsweise an einen Sägenhersteller geliefert werden.

Die Erfindung wird im Folgenden unter Bezugnahme auf die beigefügten Zeichnungen näher erläutert.

In den Zeichnungen zeigen:
- Fig. 1: eine schematische Darstellung der Zufuhr von teilchenförmigem Schneidenmaterial und des Verschweißens von zwei flächigen Trägern im erfindungsgemäßen Verfahren;
- Fig. 2: eine Variante der Fig. 1, bei der zwei teilchenförmige Schneidenmaterialien zugeführt werden;
- Fig. 3: das erfindungsgemäße Vormaterial der Fig. 1 nach dem Herstellen der Schweißverbindung;
- Fig. 4: das erfindungsgemäße Vormaterial der Fig. 3 nach dem Plattwalzen der Schweißverbindung;
- Fig. 5: das erfindungsgemäße Vormaterial der Fig. 4 nach dem Trennen der Schweißverbindung;
- Fig. 6: das erfindungsgemäße Vormaterial aus Fig. 2 nach Plattwalzen und Trennen der Schweißverbindung;
- Fig. 7: eine Variante der Figur 3 mit zwei Schneidenmaterialien;
- Fig. 8: die Variante der Figur 6 nach dem Plattwalzen der Schweißverbindung;
- Fig. 9: die Variante der Figuren 6 und 7 nach dem Trennen der Schweißverbindung;
- Fig. 10: eine weitere Variante des erfindungsgemäßen Vormaterials nach dem Verschweißen;
- Fig. 11: das Vormaterial der Figur 9 nach Plattwalzen der Schweißverbindung;
- Fig. 12: das Vormaterial der Figur 10 nach Trennen der Schweißverbindung;
- Fig. 13: eine weitere Variante des Vormaterials der Figur 11;
- Fig. 14-24: Varianten der vorbearbeiteten Kanten der im erfindungsgemäßen Verfahren verwendeten flächigen Träger.

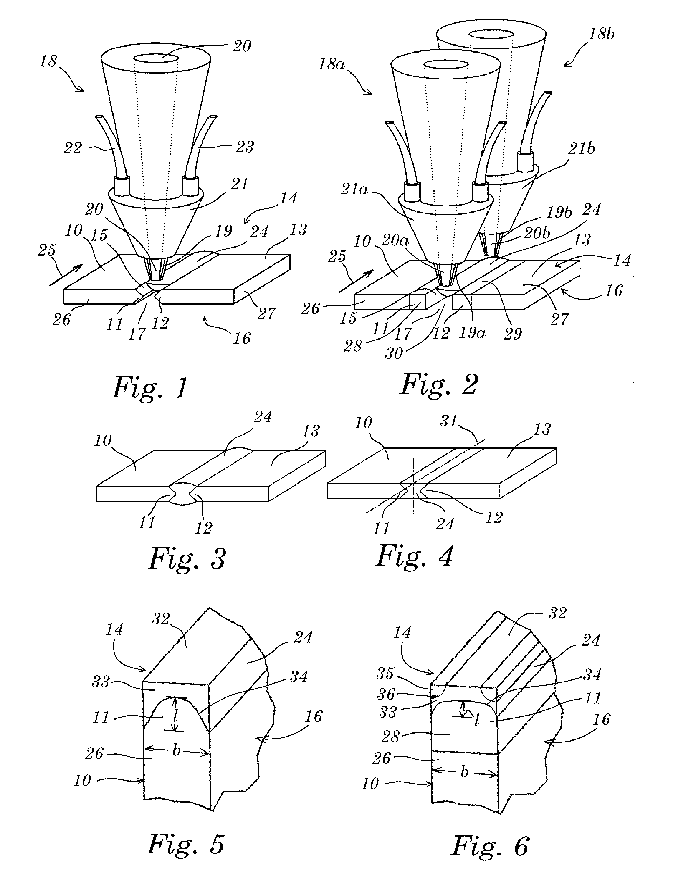

In Figur 1 ist bespielhaft eine erste Ausführungsform des erfindungsgemäßen Verfahrens zur Herstellung eines Vormaterials für ein Zerspanungswerkzeug, beispielsweise eines Vormaterials für ein Sägeblatt, ein Sägeband oder eine Schneidlinie, schematisch dargestellt. Man erkennt einen ersten flächigen Träger 10, der mit seiner Kante 11 in einem gewissen Abstand entlang der Kante 12 eines zweiten flächigen Trägers 13 angeordnet ist. Im dargestellten Beispiel sind die flächigen Träger der besseren Übersichtlichkeit halber als kurze Abschnitte dargestellt. Vorzugsweise handelt es sich aber um Endlosbänder, die beispielsweise von hier ebenfalls nicht dargestellten Spulen abgewickelt werden. Im dargestellten Beispiel sind die Kanten 11 und 12 auf der Ober- und Unterseite jeweils abgefast. Zwischen den beiden Trägern 10, 13 wird auf der Oberseite 14 eine obere Ausnehmung 15 und auf der Unterseite 16 eine untere Ausnehmung 17 gebildet. Mittels eines Schweißkopfes 18 einer nicht weiter dargestellten Schweißvorrichtung wird ein erstes teilchenförmiges Schneidenmaterial 19 in die Ausnehmung 15 eingebracht und mittels eines Laserstrahls 20 aufgeschmolzen, so dass der erste Träger 10 und der zweite Träger 13 miteinander verschweißt werden können. Der Schweißkopf 18 der Schweißvorrichtung weist im dargestellten Beispiel dazu eine Ringdüse 21 auf, der das teilchenförmige Schneidenmaterial 19 mittels Leitungen 22, 23 zugeführt wird. Es kann jedoch auch jede andere Art von Düse verwendet werden. Die dargestellte Ringdüse 21 erzeugt einen kegelförmigen Strahl des teilchenförmigen Schneidenmaterials 19, der auf die obere Ausnehmung 15 gerichtet ist. Der Laserstrahl 20 wird durch das Zentrum des Schweißkopfes 18 und das Zentrum des kegelförmigen Strahls des Schneidenmaterials 19 geführt und auf einen Bereich fokussiert, in dem das Schneidenmaterial in die Ausnehmung 15 trifft. In diesem Bereich findet der Schweißvorgang statt. Je nach verwendeten Materialien wird das Schneidenmaterial 19 und/oder ein zusammen mit dem Schneidenmaterial zugeführtes Matrixmaterial und/oder das Trägermaterial im Kantenbereich 11, 12 der flächigen Träger 10, 13 zumindest teilweise aufgeschmolzen, so dass eine Schweißverbindung 24 entsteht.

Die flächigen Träger, d.h. im dargestellten Beispiel die Endlosbänder, werden entlang des Pfeils 25 unter dem stationären Schweißkopf 18 hindurchbewegt.

Bei der in Figur 1 dargestellten Ausführungsform weisen die flächigen Träger 10, 13 lediglich jeweils einen Grundkörper 26, 27 aus Trägermaterial auf, so dass der spätere Schneidenbereich lediglich durch das als Pulver zugeführte Schneidenmaterial 19 gebildet wird.

Figur 2 zeigt eine Variante der Ausführungsform der Figur 1. Elemente, die den bereits im Zusammenhang mit Figur 1 beschriebenen Elementen entsprechen, werden mit denselben Bezugsziffern bezeichnet. In der Variante der Figur 2 werden verschiedene Abwandlungen der Ausführungsform der Figur 1 dargestellt. Die Erfindung ist jedoch nicht auf die dargestellte Kombination dieser Abwandlungen beschränkt, sondern jede der im Folgenden beschriebenen Abwandlungen kann einzeln oder in beliebiger Kombination mehrerer Abwandlungen verwirklicht werden. So werden in der Variante der Figur 2 flächige Träger 10, 13 verwendet, die nicht nur jeweils einen Grundkörper 26, 27 aus Trägermaterial, sondern zusätzlich bereits einen Kantenbereich 11, 12 aus einem weiteren Schneidenmaterial 28, 29 aufweisen. Bei den flächigen Trägern 10, 13 der Figur 2 kann es sich beispielsweise um herkömmliche Bimetallbänder handeln. Ferner weisen die flächigen Träger 10, 13 keine abgefasten Kanten wie in Figur 1, sondern gerade Kanten 11, 12 auf. Die beiden flächigen Träger 10, 13 sind wieder in einem Abstand angeordnet, so dass die obere Ausnehmung 15 und die und unter Ausnehmung 17 zusammen einen durchgehenden Spalt 30 zwischen den Trägern bilden. Schließlich werden in der Variante der Figur 2 statt eines Schweißkopfes 18 zwei hintereinander angeordnete Schweißköpfe 18a, 18b verwendet. Der Schweißkopf 18a führt, analog zum Vorgehen der Figur 1, ein erstes Schneidenmaterial 19a in die obere Ausnehmung 15 ein und erzeugt eine Schweißverbindung 24. Mit der Schweißvorrichtung 18b kann ein weiteres Schneidenmaterial 19b zur Herstellung eines mehrschichtigen Schneidenbereichs aufgetragen werden. Falls kein weiteres Schneidenmaterial aufgetragen werden muss, ist es auch möglich, die Lasereinrichtung der zweiten Schweißvorrichtung 18b, oder eine ähnliche Wärmequelle, dazu zu verwenden, die Schweißverbindung 24 wärmezubehandeln, um Spannungen in der Schweißverbindung zu reduzieren.

In den Darstellungen der Figuren 1 und 2 wird teilchenförmiges Schneidenmaterial von der Oberseite 14 her in die obere Ausnehmung 15 eingebracht. Je nach Formgebung der Ausnehmung, insbesondere wenn die obere und die untere Ausnehmung, wie in Figur 2, zusammen einen geraden Spalt 30 bilden und wenn das Schneidenmaterial beispielsweise als Fülldraht zugeführt wird, kann eine Schneidenmaterialzufuhr von einer Seite ausreichen. Meist wird jedoch eine Zufuhr des Schneidenmaterials von der Oberseite und der Unterseite der flächigen Träger her, gleichzeitig oder nacheinander, bevorzugt sein. Für eine nacheinander stattfindende Zufuhr kann die Anordnung der flächigen Träger 10, 13 beispielsweise über eine (nicht dargestellte) Umlenkrolle geführt oder verdrillt werden, so dass die in den Figuren 1 und 2 dargestellte Unterseite 16 anschließend nach oben gerichtet und die Oberseite 14 mit der bereits erzeugten Schweißverbindung 24 nach unten gerichtet ist.

Insbesondere, wenn die beiden flächigen Träger 10, 13 auf Abstand angeordnet sind, ist es vorteilhaft, wenn die Ausnehmung, die gerade nicht mit Schneidenmaterial befüllt wird, auf einer (nicht dargestellten) Matrize läuft, die einen Durchtritt des Schneidenmaterials verhindert. Die Matrize kann der Form der Ausnehmung angepasst sein.

Selbstverständlich können die flächigen Träger 10, 13 der Figuren 1 und 2 auch ohne Abstand zueinander angeordnet werden, also, so dass die Kanten 11, 12 aneinanderstoßen.

In Figur 3 ist das Ergebnis des Schweißvorgangs der Figur 1 dargestellt, also für den Fall, dass der erste und zweite Träger beim Verschweißen auf Abstand angeordnet waren. Man erkennt, dass die Schweißverbindung 24, die im Wesentlichen aus dem zugeführten teilchenförmigen und eingeschmolzenen Schneidenmaterial 19 besteht, in Form einer Schweißüberhöhung über die Oberseite bzw. Unterseite der flächigen Träger 10, 13 hinausragt. In einem solchen Fall wird der Schweißverbindungsbereich vorzugsweise noch plattgewalzt, so dass man einen ebenen Verbund erhält, wie er in Figur 4 dargestellt ist. Vor oder alternativ zu dem Plattwalzen kann die Schweißerhöhung gegebenenfalls auch noch abgeschliffen werden. Ergänzend oder alternativ zum Plattwalzen kann die Schweißverbindung 24 noch mittels einer Profilwalzung bearbeitet werden. Damit kann ein Vormaterial hergestellt werden, welches mit geringerem Aufwand als den aus dem Stand der Technik bekannten Methoden zu speziellen Zahngeometrien, beispielsweise Trapezzähnen, verarbeitet werden kann.

Anschließend wird der Träger 10 im Wesentlichen entlang der Schweißverbindung 24, beispielsweise entlang der in Figur 4 dargestellten Trennlinie 31 aufgetrennt. Nach dem Auftrennen und gegebenenfalls weiteren Bearbeitungsschritten liegt das erfindungsgemäße Vormaterial in Form von zwei flächigen Trägern, vorteilhaft Bändern, mit jeweils einem Kantenbereich vor, der aus einem Schneidmaterial besteht. Bei dem erfindungsgemäßen Vormaterial kann es sich beispielsweise um zwei Bimetallbänder handeln, die anschließend durch Einbringen von Zähnen in den Kantenbereich zu einem Zerspanungswerkzeug weiterverarbeitet werden können. Die Trennlinie 31 ist im dargestellten Beispiel eine gerade Mittellinie durch die Schweißverbindung 24. Die Trennlinie kann jedoch auch eine kompliziertere Form aufweisen und beispielsweise der gewünschten späteren Form der Zähne angenähert sein. Die Trennung der beiden flächigen Träger wird vorzugsweise schon bei der Herstellung des erfindungsgemäßen Vormaterials durchgeführt, so dass zwei Bänder mit jeweils einer Schneidkante entstehen.

In Figur 5 ist eine Hälfte der nach dem Schnitt der Figur 4 entstandenen erfindungsgemäßen Vormaterialien im Querschnitt dargestellt. Man erkennt zunächst, dass nach dem Schnitt entlang der Linie 31 in Fig. 4 eine Schnittfläche 32 in der Schweißverbindung 24 entstanden ist. Der flächige Träger 10 mit dem Grundkörper 26 und ursprünglichen Kantenbereich 11 aus Trägermaterial ist nun von einem Schneidenbereich 33 aus dem ursprünglich teilchenförmigen Schneidmaterial 19 umgeben. Charakteristisch für das erfindungsgemäße Verfahren bei dem das Schneidenmaterial in Pulverform auf den Kantenbereich der Träger aufgebracht wird, ist die Tatsache, dass es im Gegensatz zum Aufschweißen eines Kantdrahtes gemäß Stand der Technik im Querschnitt des fertigen Bandes, dort wo das Trägermaterial und das Schneidenmaterial ineinander übergehen, keine im wesentlichen horizontale Schweißnaht/Legierungszone entsteht. Vielmehr umgreift das Schneidenmaterial den Kantenbereich des flächigen Trägers, so dass es auf der Oberseite 14 und/oder der Unterseite 16 entlang der Höhe des fertigen flächigen Vormaterials zu einer Überlappung von Schneidenbereich 33 und Kantenbereich 11 des flächigen Trägers 10 kommt, so dass eine Legierungszone 34 zwischen den Bereichen 33, 11 typischerweise nicht horizontal verläuft. Typischerweise überlappen der Schneidenbereich 33 und der Kantenbereich 11 entlang der Höhe des Querschnitts auf einer Länge l, die in etwa dem 0,2- bis 3-fachen der Breite b des flächigen Trägers im Querschnitt entspricht. Auf diese Weise wird eine besonders stabile Schneidkante bereitgestellt.

Figur 6 zeigt eine der Ansicht der Figur 5 entsprechende Ansicht eines erfindungsgemäßen Vormaterials, das mit dem Verfahren der Figur 2 erhältlich ist. Im Vergleich zur Figur 5 erkennt man deutlich den mehrschichtigen Aufbau des Schneidenbereichs des erfindungsgemäßen Vormaterials. Da bereits der flächige Träger 10 ursprünglich einen Grundkörper 26 aus Trägermaterial und einen Kantenbereich 11 aus einem weiteren Schneidenmaterial 28 aufwies, stellt der erste mit dem erfindungsgemäßen Verfahren aufgebrachte Schneidenbereich 33 aus Schneidenmaterial 19a bereits die zweite Schicht an Schneidenmaterial dar. Die mit dem erfindungsgemäßen Verfahren erzeugte erste Legierungszone 34 verläuft demnach zwischen dem Schneidenmaterial 28 des flächigen Trägers 10 und dem Schneidenbereich 33 aus verschweißtem Schneidenmaterial 19a. Man erkennt, dass obwohl die Kanten aus Schneidenmaterial 28, wie in Figur 2 dargestellt, ursprünglich gerade war, es trotzdem wieder zu einer Überlappung des Trägers 10 aus Schneidenmaterial 28 und des Schneidenbereich 33 aus Schneidenmaterial 19a entlang einer Länge l kommt. Diese Überlappung entsteht bei gerader Kante hauptsächlich durch das Aufsprühen und Aufschmelzen des Schneidenmaterials 19a und das anschließenden Plattwalzen der über die Oberseite 14 der flächigen Träger ragenden Schweißverbindung 24. Da gemäß Figur 2 mittig auf die Schweißverbindung 24 noch ein zweites teilchenförmiges Trägermaterial 19b mit höherer Verschleißfestigkeit als das Trägermaterial 19a aufgebracht wurde, weist das fertige Vormaterial der Figur 6 einen zusätzlich verstärkten Eckenbereich 35 aus diesem zweiten Trägermaterial 19b auf. Zwischen dem Eckenbereich 35 und dem Schneidenbereich 33 verläuft eine zweite Legierungszone 36.

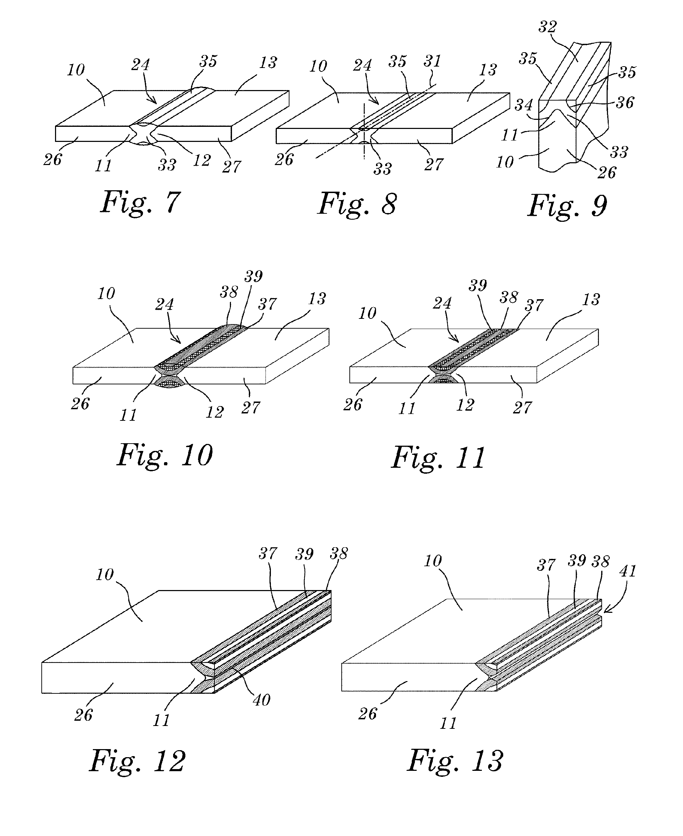

In den Figuren 7 bis 9 ist eine weitere Variante eines mehrschichtigen Aufbaus des Schneidenbereichs dargestellt, wie sie beispielsweise wieder mit der zweistufigen Schweißeinrichtung der Figur 2 hergestellt werden kann. Die Variante der Figuren 7 - 9 unterscheidet sich von der in den Figuren 2 und 6 dargestellten Variante lediglich dadurch, dass die flächigen Träger 10, 12 keinen Schneidenbereich aus einem weiteren Schneidenmaterial 28, 29 aufweisen, sondern jeweils nur einen Grundkörper 26, 27 aus Trägermaterial umfassen. Ferner sind die Kantenbereiche 11, 12 der flächigen Träger 10, 13 im Fall der Variante der Figuren 7 bis 9 abgefast statt gerade wie in den Figuren 2 und 6. In Figur 7 ist die Schweißverbindung 24 vor dem Auswalzen dargestellt. Man erkennt, dass der Verbindungsbereich zwischen den beiden flächigen Trägern 10, 13 wieder einen ersten Schneidenbereich 33 dem ersten Schneidenmaterial 19a umfasst. Auf den ersten Schneidenbereich 33 wurde wieder mittig der spätere Eckenbereich 35 aus dem zweiten Schneidenmaterial 19b aufgebracht. Nach Plattwalzen der Schweißverbindung (vgl. Figur 8) und Trennen der Schweißverbindung 24 entlang der Schnittlinie 31 entstehen zwei erfindungsgemäße Vormaterialien, von denen in Figur 9 eines exemplarisch dargestellt ist. Das Vormaterial weist wieder einen flächigen Träger 10 auf, wobei hier sowohl der Grundkörper 26 als auch der Kantenbereich 11 aus dem Trägermaterial bestehen. Daran schließt sich nun, verbunden über eine Legierungszone 34, der mit dem erfindungsgemäßen Verfahren aufgebrachte Schneidenbereich 33 aus dem ersten Schneidenmaterial 19a an, der eine Schnittfläche 32 aufweist. Zusätzlich zu dem Schneidenbereich 33 weist die Variante der Figur 9 einen aus zweitem Schneidenmaterial 19b bestehenden Eckenbereich 35 auf, so dass durch entsprechende Materialwahl beispielsweise gewährleistet werden kann, dass die schneidenden Ecken der aus dem Vormaterial der Figur 9 herausgearbeiteten Zähne eines Sägeblatts oder Sägebandes eine besonders hohe Widerstandsfähigkeit aufweisen. Der Schneidenbereich 33 und der Eckenbereich 35 sind über eine zweite Legierungszone 36 miteinander verbunden.

In den Figuren 10-13 ist eine weitere Variante eines mehrschichtigen Schneidenaufbaus dargestellt. Im dargestellten Beispiel sind zwei Lagen 37, 38 eines Schneidenmaterials durch eine Lage 39 eines Materials mit anderen Eigenschaften getrennt. Nach Herstellen der Schweißverbindung (Figur 10), Plattwalzen (Figur 11) und Trennen der Schweißverbindung entsteht das in Figur 12 dargestellte Vormaterial. Das entsprechende Band kann entweder unmittelbar zur Herstellung von Zahnprofilen in dem Schneidbereich verwendet werden. Es kann aber auch, wie in Figur 13 dargestellt, zunächst ein in Figur 12 noch erkennbarer Mischbereich 40, der insbesondere bei geringem Abstand der Kanten 11, 12 der flächigen Träger 10, 13 einen höheren Anteil an Trägermaterial enthalten und daher eine geringere Härte als die Lagen aus Schneidenmaterial 37 und 38 aufweisen kann, mittels einer beispielsweise keilförmigen Nut 41 (vgl. Figur 13) herausgeschnitten werden. Auf diese Weise können bei der späteren Weiterverarbeitung Zähne mit mehreren schneidenden Ecken erzeugt werden.

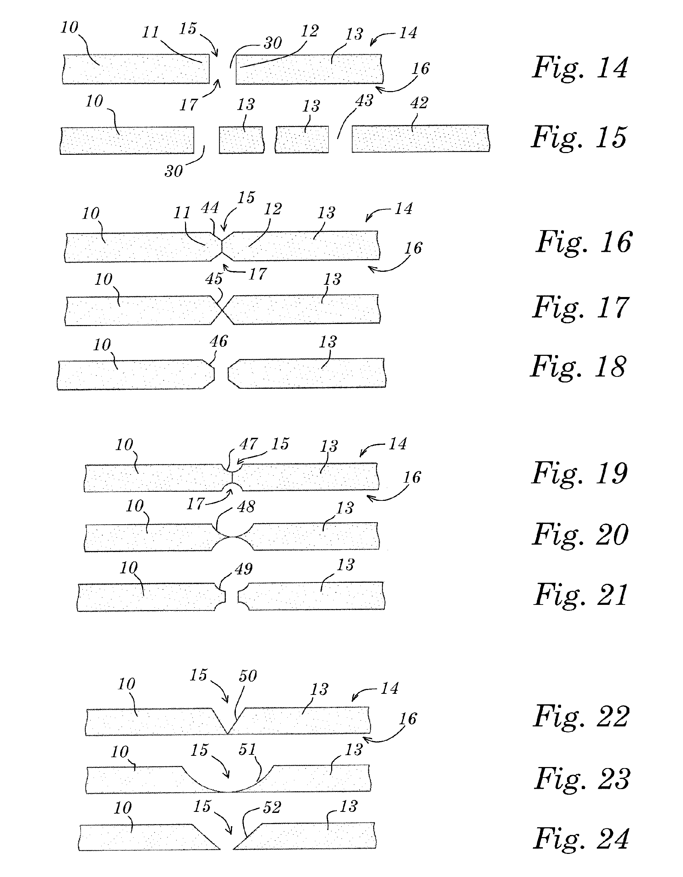

In den Figuren 14 bis 24 sind verschiedenste Anordnungen der Trägerbänder 10, 13 bzw. der Form ihrer gegebenenfalls vorbearbeiteten Kanten 11, 12 dargestellt.

In Figur 14 sind die beiden flächigen Träger 10, 13 auf Abstand angeordnet und die Kanten 11, 12 sind unbearbeitet, so dass die obere Ausnehmungen 15 und die untere Ausnehmung 17 wie in Figur 2 einen durchgehenden Spalt 30 zwischen den Trägern 10, 13 bilden. In Figur 15 sind entsprechende Trägerbänder 10, 13 angeordnet, wobei jedoch ein weiteres Trägerband 42 vorgesehen ist, so dass zwischen dem zweiten Trägerband 13 und dem weiteren Trägerband 42 eine weitere Ausnehmung 43 definiert wird, der ebenfalls Schneidenmaterial zugeführt werden kann. Auf diese Weise können beispielsweise vier bandförmige Vormaterialien gleichzeitig erzeugt werden, was die Prozessgeschwindigkeit erhöht. Die Parallelisierung kann selbstverständlich durch weitere Trägerbänder weiter erhöht werden.

Die Figuren 16, 17 und 18 zeigen Varianten der flächigen Träger 10, 13, bei denen die Kanten 11, 12 unterschiedliche Abfasungen 44, 45, 46 aufweisen. Ferner können die Träger 10, 13, wie in den Figuren 16, 17 aneinanderstoßend oder, wie in Figur 18, in einem Abstand zueinander angeordnet sein.

In den Figuren 19 bis 21 sind die Kanten 11,12 der flächigen Träger 10,13 mit symmetrischen Vertiefungen 47, 48, 49 versehen, die beim aneinander Anordnen der Träger (entweder auf Abstand wie in Figur 21 oder nicht auf Abstand wie in den Figuren 19 oder 20) die entsprechenden oberen und unteren Ausnehmungen 15, 17 zur Einbringung des Schneidenmaterials bilden.

Während in den Varianten der Figuren 16 bis 21 die Abfasungen bzw. die Vertiefungen an den Kanten der flächigen Träger 10, 13 symmetrisch auf der Oberseite 14 bzw. der Unterseite 16 der flächigen Träger 10, 13 ausgebildet waren, sind in den Figuren 22 bis 24 Varianten mit asymmetrischer Ausgestaltung einer Abfasung 50 bzw. von Vertiefungen 51, 52 dargestellt. In den gezeigten Fällen sind die Kanten so vorbearbeitet, dass lediglich obere Ausnehmungen 15 entstehen. In solchen Fällen kann es ausreichen, wenn Schneidenmaterial nur von der Oberseite 14 her zugeführt wird.

## Patentansprüche

1. Verfahren zur Herstellung eines Vormaterials für ein Zerspanungswerkzeug, insbesondere eines Vormaterials für ein Sägeblatt, ein Sägeband, eine Schneidlinie, ein Stanzmesser oder eine Klinge, wobei
man einen ersten flächigen Träger (10) mit einer seiner Kanten (11) entlang einer Kante (12) eines zweiten flächigen Träger (13) anordnet;
man die ersten und zweiten Träger (10, 13) entlang der Kanten (11,12) unter Zufuhr wenigstens eines ersten teilchenförmigen Schneidenmaterials (19, 19a) miteinander verschweißt; und
man den ersten und zweiten Träger (10,13) im Wesentlichen entlang der so erzeugten Schweißverbindung (24) wieder trennt.

2. Verfahren gemäß Anspruch 1, wobei man die ersten und zweiten flächigen Träger (10,13) so zueinander anordnet, dass zwischen dem ersten und zweiten Träger (10,13) wenigstens eine Ausnehmung (15,17) gebildet wird, wobei man das wenigstens eine erste Schneidenmaterial (19, 19a) in die Ausnehmung (15,17) einbringt.

3. Verfahren gemäß Anspruch 2, wobei man die ersten und zweiten flächigen Träger (10,13) in Form von Bändern in einem Abstand voneinander anordnet, so dass einander gegenüberliegenden Kanten (11,12) der ersten und zweiten flächigen Träger (10,13) die Ausnehmung (15,17) definieren.

4. Verfahren gemäß einem der Ansprüche 1 bis 3, wobei die Kante (11) des ersten flächigen Trägers (10) und/oder die Kante (12) des zweiten flächigen Trägers (13) vorbearbeitet sind.

5. Verfahren gemäß einem der Ansprüche 1 bis 4, wobei man die ersten und zweiten Träger (10,13) miteinander verschweißt, indem man im Bereich der Kante(n) (11,12) den ersten und/oder den zweiten flächigen Träger (10,13) und/oder das erste teilchenförmigen Schneidenmaterial (19, 19a) zumindest teilweise aufschmilzt und den aufgeschmolzenen Materialverbund wenigsten teilweise erstarren lässt.

6. Verfahren gemäß einem der Ansprüche 1 bis 5, wobei der erste flächige Träger (10) und/oder der zweiten flächige Träger (13) einen Grundkörper aus einem Trägermaterial umfassen.

7. Verfahren gemäß Anspruch 6, wobei der erste flächige Träger (10) und/oder der zweite flächige Träger (13) einen Kantenbereich (11,12) aus einem weiteren Schneidenmaterial (28) aufweisen.

8. Verfahren gemäß einem der Ansprüche 1 bis 7, wobei man vor dem Trennen des Verbunds aus erstem und zweitem Träger (10,13) und erstem Schneidenmaterial (19a) zumindest ein zweites teilchenförmiges Schneidenmaterial (19b) zuführt und aufschmilzt.

9. Verfahren gemäß einem der Ansprüche 1 bis 8, wobei man das teilchenförmige Schneidenmaterial (19,19a,19b) in Form eines Pulver, eines Granulats, einer Paste oder eines Fülldrahtes zuführt.

10. Verfahren gemäß einem des Ansprüche 1 bis 9, wobei das Schneidenmaterial Metalle und/oder Metalllegierungen enthält.

11. Verfahren gemäß einem des Ansprüche 1 bis 10, wobei das Schneidenmaterial metallische Hartstoffe enthält.

12. Verfahren gemäß einem der Ansprüche 1 bis 11, wobei man die ersten und zweiten Träger (10,13) durch Energiezufuhr mittels einer Schweißvorrichtung miteinander verschweißt.

13. Verfahren gemäß einem der Ansprüche 1 bis 12, wobei man das teilchenförmige Schneidenmaterial (19,19a,19b) beiden Seiten (14,16) der flächigen Träger (10,13) zuführt.

14. Flächiges Vormaterial zur Herstellung eines Zerspanungswerkzeuges, insbesondere eines Sägeblatts, eines Sägebandes, einer Schneidlinie, eines Stanzmessers oder einer Klinge, erhältlich nach dem Verfahren gemäß einem der Ansprüche 1 - 13, umfassend einen flächigen Träger (10), der einen Grundkörper (26,27) aus einem Trägermaterial aufweist, und einen Schneidenbereich (33) aus wenigstens einem ersten Schneidenmaterial (19,19a), wobei der flächige Träger (10) und der Schneidenbereich (33) über eine erste Legierungszone (34) miteinander verbunden sind, **dadurch gekennzeichnet, dass** der Schneidenbereich (33) und der flächige Träger (10) auf einer Querschnittslänge (l) überlappen, die im Bereich des 0,2 - 3-fachen der Querschnittsbreite (b) des flächigen Trägers (10) liegt.

15. Flächiges Vormaterial zur Herstellung eines Zerspanungswerkzeuges, insbesondere eines Sägeblatts, eines Sägebandes, einer Schneidlinie, eines Stanzmessers oder einer Klinge, erhältlich nach dem Verfahren gemäß einem der Ansprüche 7 oder 8, umfassend einen flächigen Träger (10), der einen Grundkörper (26) aus einem Trägermaterial aufweist, und einen Schneidenbereich (33) aus wenigstens einem Schneidenmaterial (19,19a, 28), wobei der Schneidenbereich (33) an wenigstens einer Ecke einen Eckenbereich (35) aus einem anderen Schneidenmaterial (19b) aufweist, **dadurch gekennzeichnet, dass** der Eckenbereich (35) und der Schneidenbereich (33) über eine Legierungszone (36) miteinander verbunden sind.
